# EUROPEAN PATENT APPLICATION

(11) **EP 4 000 715 A1**
(43) Date of publication of application: **25.05.2022**
(21) Application number: 20207834.1
(22) Date of filing: 16.11.2020
(51) Int. Cl.: B01D 53/14

(54) **TWO STEP AMINE ABSORPTION PROCESS FOR REMOVAL CO2/H2S FROM BIOGAS**

(71) Applicant: Airco Process Technology A/S, 7000 Fredericia (DK)
(72) Inventor: Find, Rasmus, 7100 Vejle (DK)
(74) Representative: AWA Denmark A/S

(57) **Abstract**

The present invention relates to a method for upgrading biogas, i.e. a method for removing carbon dioxide and/or hydrogen sulphide from biogas. Particularly the invention relates to a method for upgrading biogas by absorption in two absorbers, where the gas effluent of the first absorber is pressurized and fed to the second absorber and wherein the liquid effluents of the two absorbers are regenerated to form a regenerated absorbtion stream, which is then provided in two absorption streams which is fed to the first and second absorber respectively. It also relates to a system for performing the method.

## Description

### Field of Technology

The present invention relates to upgrading biogas comprising methane, carbon dioxide and hydrogen sulphide. Biogas is gas generated by a biological process, such as an anaerobic biological process, and upgrading biogas refers to the removal of carbon dioxide and/or hydrogen sulphide from the biogas.

### Background

Biogas is a gas produced by the biological decomposition of biomass and it comprises methane, carbon dioxide and hydrogen sulphide. The biomass can be waste streams from the agricultural industry, manure, sewage, food production or the like and as such biogas presents an opportunity to convert waste streams into a sustainable and valuable gas product which can be used e.g. as a fuel or a chemical feed in industrial processes or a precursor. The biogas obtained from a biogas plant is typically provided at low pressures and contains significant amounts of carbon dioxide, hydrogen sulphide and water. Hence, utilization of the biogas requires purification, also known as upgrading, to meet gas quality standards and compression before it can be supplied to a gas grid or otherwise transported. The limits for carbon dioxide and hydrogen sulphide content of the biogas depend on the application, where production of liquified biogas (LBG) demands lower limits than gas of pipeline quality, e.g. due to the issue of carbon dioxide condensation/solidification in the liquifying systems. Therefore, there is an increasing interest in efficient processes for upgrading biogas. Such upgraded biogas is sometimes referred to as biomethane or renewable natural gas (RNG). "Biogas upgrading" as used herein refers to removal of undesired components, such as carbon dioxide and/or hydrogen sulphide.

Known processes for biogas upgrading are absorption processes and/or scrubbing processes wherein carbon dioxide and hydrogen sulphide in a biogas feed is absorbed in a liquid. Typical physical absorbents are methanol, DEPG, NMP and water and typical chemical absorbents are amines, but others are available. In such absorption processes some methane will also be absorbed, representing a methane loss in the process, which is an important factor for the commercial viability of a process. Another important factor is the regeneration of the absorbing media, where the absorbed gas is desorbed allowing the absorbing media to be reused.

For chemical absorption agents, regeneration is typically done by heating, stripping, or flash operations or combinations thereof. The degree of regeneration affects the achieved purity and represents significant utility and hence operational costs. As the required limits for carbon dioxide and/or hydrogen sulphide are lowered, the utility demand of the biogas upgrade process increases.

Biogas upgrade processes thus need to optimize the operational costs while still satisfying the carbon dioxide and hydrogen sulphide limits of the product, and processes improving on these aspects present major economic and environmental advantages, in particular due to the typically large processing volumes.

In a typical known process an absorber is fed sour biogas at the bottom and a lean amine solution fed at the top, whereby the streams are brought into contact in a counter-current flow. Sweet gas is recovered from the top of the absorber and the rich amine solution is retrieved from the bottom of the absorber. The rich amine solution is regenerated by heating and stripping it of absorbed gas in a stripper column, providing a lean amine solution which is then led to the absorber again. Lowering the carbon dioxide or hydrogen sulphide in the sweet gas can be achieved by increasing the liquid to gas ratio in the absorber or the degree of regeneration of the amine, both options increasing the operational costs.

Some biogas upgrade plant designs seek to lower operational costs of the regeneration process by splitting the rich amine stream in two and regenerating them to different degrees, which is sometimes referred to as split-flow processes. One such process is proposed in DE102009056660A1 where two absorbers are provided in series and the rich amine solution from the first absorber is split and regenerated in a flash process and a heating process respectively. The heating process generates a comparatively leaner amine solution which is used in the second absorber to polish the biogas, and the flash unit generates a less lean amine solution which is used in the first absorber. As only part of the amine solution is regenerated in the operationally expensive heating system, the efficiency of the process may be increased. However, a disadvantage of this process is that it requires a very lean amine solution for the second column to obtain high purity biogas, and as regeneration of the amine solution is a non-linear process in the sense that achieving the last degrees of regeneration requires more energy than the first, this can present significant operational costs. Furthermore, as the flash regeneration provides a less lean amine solution, a larger circulation rate of solvent may be required overall.

An object of the invention is to provide an improved process for upgrading biogas, and more preferably processes which improve on one or more of yield and utility consumption, while providing upgraded biogas satisfying quality limits.

### Summary of the invention

These and further objects are met in a first aspect of the invention providing a method for upgrading a biogas stream, the biogas stream comprising methane, carbon dioxide, and hydrogen sulphide, the method comprising the steps of:
a. feeding the biogas stream and a first liquid absorption stream to a first absorber,
b. absorbing carbon dioxide and/or hydrogen sulphide from the biogas stream into the first liquid absorption stream, thereby obtaining a first gas effluent and a first liquid effluent,
c. increasing the pressure of the first gas effluent, to obtain a pressurized biogas stream,
d. feeding the pressurized biogas stream and a second liquid absorption stream to a second absorber,
e. absorbing carbon dioxide and/or hydrogen sulphide from the pressurized biogas stream into the second liquid absorption stream, thereby obtaining a second gas effluent and a second liquid effluent,
f. regenerating the first liquid effluent and the second liquid effluent in a regeneration system, thereby obtaining a regenerated absorption stream,
g. providing the regenerated absorption stream in two streams to obtain the first liquid absorption stream and the second liquid absorption stream, and
h. recovering or further processing the second gas effluent as an upgraded biogas stream.

This solution offers a biogas upgrade method providing a suitable carbon dioxide and/or hydrogen sulphide depletion with improved efficiency in terms of energy consumption. As gas compression and regeneration of absorbing liquid are energy intensive, providing acceptable gas purities while maintaining yields imposes a significant utility demand. The method according to the invention achieves increased energy efficiency, e.g. in the form of increased purity of the upgraded biogas stream at substantially the same energy consumption or reduced energy consumption while achieving the same purity levels and yields.

In the method according to the invention the regenerated absorption stream is provided in two streams to obtain the first and second liquid streams. At the step where the first and second liquid absorption streams are provided from the regenerated absorption stream they have the same composition. The absorption properties of the second absorber are altered compared to the first absorber by the increase in pressure. The increased pressure increases the partial pressures of carbon dioxide and/or hydrogen sulphide and thus promotes mass transfer in the second absorber. The increased absorption may thus be achieved without altering the liquid phase composition. This increased absorption of the method can also provide for lower levels of carbon dioxide and/or hydrogen sulphide in the upgraded biogas. It may also provide for a higher utilization or load of the absorbing streams, allowing for a reduced circulation rate of absorption liquid, lowering the energy consumption for regeneration. As part of the biogas stream is absorbed in the first absorber at lower pressure, the energy demand of pressurizing the first gas effluent will be reduced. The method may thus increase the purity of the second gas effluent by increasing the pressure in the second absorber compared to the first absorber, affecting the mass transfer from gas to liquid, rather than affecting e.g. the chemical driving force of the absorption by having a very pure absorption stream. This is especially advantageous in processes where regenerating the absorption streams to a high degree requires significantly more energy than regenerating them to a lesser degree.

Furthermore, in processes where the upgraded biogas is further processed, and the further processing requires compression, such as in the production of LBG, the energy consumption of the compression is advantageously used in the biogas upgrade process to increase purity, thereby lowering the overall operational costs.

In the method the biogas stream and the first liquid absorption stream are fed to the first absorber, and the gas and liquid phases of the first absorber are brought into contact whereupon carbon dioxide and/or hydrogen sulphide is transferred from the gas to the liquid phase. The gas phase and liquid phase exiting the first absorber are herein denoted the first gas effluent and the first liquid effluent, respectively. The first liquid effluent is thus rich in carbon dioxide and/or hydrogen sulphide compared to the first liquid absorption stream and vice versa for the gas streams.

To further purify the first gas effluent, the pressure thereof is increased, and a second absorption process is carried out in the second absorber, at higher pressure than in the first absorber. The gas phase and liquid phase exiting the second absorber are denoted the second gas effluent and the second liquid effluent respectively.

The second gas effluent may be recovered as the upgraded biogas stream, which can optionally be further processed. Recovering is understood to be obtaining the upgraded biogas and further processing could include further steps such as water removal, condensation or liquefaction.

The biogas stream may be provided directly from a biogas plant at low pressure and the first absorber may generally have an operating pressure corresponding to the pressure of the biogas stream. "Biogas plant" is understood to be the facility which produces the biogas from biomass. The pressure of the biogas stream is typically provided at about atmospheric pressure or slightly compressed, such as about 1 to 1.5 bara. The biogas may typically comprise 50 - 70 % of methane, 30 - 50 % carbon dioxide and up to 2 % hydrogen sulphide on mole basis and may further contain water, oxygen and/or nitrogen.

The first and second liquid effluents are regenerated in the regeneration system to provide the regenerated absorption stream, which may be denoted a regeneration step. The regenerated absorption stream is the liquid(s) from which absorbed gas, carbon dioxide and/or hydrogen sulphide, has been removed in the regeneration step. The regenerated absorption stream can thus be reused in the absorbers to deplete biogas of carbon dioxide and/or hydrogen sulphide once again. The gas removed in the regeneration step may be denoted the off-gas which is a waste stream. The waste streams can be flared, thermally oxidized or released to the atmosphere. In some cases, the hydrogen sulphide of the off-gas is led to a sulphur recovery plant. The regeneration step should not only be understood as feeding the liquid effluents directly to the regeneration system but may also encompass configurations where the liquid effluents are fed to other units or mixed into other streams prior to entering the regeneration system. In one such configuration the second liquid effluent is fed into the first absorber, preferably at the lower section of the absorber, thereby providing a mixed liquid phase in the first absorber which exits as the first liquid effluent which can then be regenerated in the regeneration system. In another configuration, the first and second liquid effluents are mixed outside of the first and second absorbers, and the resulting mixture is regenerated in the regeneration system. In yet another alternative configuration, the first liquid effluent is fed to the second absorber providing a mixed liquid phase therein which exits as the second liquid effluent which can then be regenerated in the regeneration system. Hence, the step of regenerating the first and second liquid effluents is understood to be a step of regenerating the liquid effluents of the first and second absorber, regardless of the manner or composition in which they enter the regeneration system. The step could also be said to be a step of providing the regenerated absorption stream by regenerating the first liquid effluent and the second liquid effluent.

The term "regeneration system" should be understood to be a system which regenerates the liquid effluents to obtain the regenerated absorption stream. As such the regeneration system could comprise one or more regeneration units, such as one or more stripper columns, reboilers and/or flash units.

The regenerated absorption stream is provided in two streams to obtain the first liquid absorption stream and the second liquid absorption stream. This can be achieved e.g. by splitting a single regenerated absorption stream obtained from the regeneration system in two, or in a functionally equivalent manner where the regeneration system provides two streams of similar or equal composition. Hence, the first and the second liquid absorption streams are obtained from the same regenerated absorption stream. The second liquid absorption stream may be heated prior to feeding it to the second absorber. Any gas resulting from such heating may be recycled into the regeneration system as a stripping gas.

Suitably the method further comprises a step of mixing the first and second liquid effluents.

Mixing the first and second liquid effluent provides a stream of liquid which can be regenerated in a simple manner in the regeneration system to obtain the regenerated absorption streams. By "mixing" is understood that the two streams are combined which can be achieved in several ways such as i) mixing the two streams outside of the first and second absorber, ii) feeding at least part of the second liquid effluent into the first absorber and thereby obtaining a mixed liquid phase which exits as the first liquid effluent or, iii) feeding the first liquid effluent to the second absorber providing a mixed liquid phase which exits as the second liquid effluent. In this configuration the first and second liquid effluents are mixed prior to the step of regenerating them.

Suitably the method further comprises a step of feeding at least a part of the second liquid effluent to the first absorber, preferably at a lower section of the first absorber.

By feeding the second liquid effluent into the first absorber, preferably at the lower section, the absorbed gasses of the second liquid effluent may be at least partially released, allowing them to be absorbed in the first absorber. This prevents methane absorbed in the second absorber from being released in the regeneration system as only methane which remains absorbed at the lower pressure of the first absorber is led to the regeneration system, thereby reducing methane slip. By feeding the liquid effluent at the lower section of the absorber, the desorbed gas can be contacted with the liquid phase of the absorber. Lower section should be understood to be below the midway point of the absorber, such as in the sump of the absorber. When the second liquid effluent is fed to the first absorber the resulting liquid phase of the first absorber, which exits the first absorber, is the first liquid effluent.

By "at least a part of the second liquid effluent" should be understood that the entirety of the second liquid effluent could be fed to the first absorber or only a part thereof. This part could in one variation be gas desorbed from the second liquid effluent as a result of a pressure reduction such as in an intermediate flash unit. In such a case the desorbed gas is fed to the first absorber, while the remaining liquid could be added to the first liquid effluent outside of the first absorber.

Suitably the method further comprises a step of feeding the first liquid effluent to the second absorber, preferably at a midpoint of the second absorber.

Such a method may be advantageous in the case of chemical absorption, where the reaction kinetics are slow and the various partial pressures in the gas phase control the absorption. A higher pressure in an absorber provides a higher loading of the liquid phase, which reduces the required circulation rate of absorption liquid and in turn reduces the energy expenditure of regeneration. The term "load" is understood to be the amount of gas absorbed by the liquid compared to the maximum amount of gas it can absorb. However, compression of the biogas stream to such a pressure comes with significant compressor duty. By absorbing part of the carbon dioxide and/or hydrogen sulphide from the biogas stream into the first liquid effluent in the first absorber, the amount of gas to be compressed to the higher pressure is reduced. Further, as the resulting first liquid effluent is not fully loaded it can be pressurized and fed to the second absorber, which will further increase the amount of absorbed gas therein before it is regenerated. In this way the amount of gas to be compressed is reduced and the required liquid circulation rate is reduced by increasing the load of the liquid phase overall, which improves the efficiency of the method. The first liquid effluent is not fed to the top of the second absorber as it is partially loaded with absorbed gas but at a position below the top of the second absorber, preferably at midway point of the absorber. The exact feeding position may vary depending on the composition of the first liquid effluent.

Suitably the operating pressure of the second absorber is 4 to 40 bar, preferably 10 to 30 bar, more preferably 15 to 25 bar.

The specific pressure of the second absorber is suitably chosen according to the requirements of the upgraded biogas and/or the type of absorption liquid. For chemical absorption, such as amine-based processes, a pressure of about 4 to 40 bar may typically be suitable, such as 10 to 30 bar or 15 to 25 bar. It is within the skills of a practitioner to choose an appropriate pressure for a specific application within the range.

Unless otherwise specified, the operating pressure of an absorber should be understood to be the pressure of the gas effluent thereof. Unless otherwise specified, pressure values provided herein are absolute pressures.

Suitably the method further comprises a step of increasing the pressure of the second liquid absorption stream. The pressure of the second liquid absorption stream is suitably increased to at least the operating pressure of the second absorber. The flow rate of the second liquid absorption stream is typically much lower than that of the first liquid absorption stream, the utility costs associated with increasing the pressure of the second liquid effluent may be negligible.

Suitably the operating pressure of the first absorber is 1 to 4 bar, preferably 1 to 2 bar, more preferably 1 to 1.5 bar.

Typically, the operating pressure of the first absorber is at substantially the level as the pressure of the supplied biogas, which may be obtained directly from the biogas plant. The pressure of the first absorber may be higher than the supplied biogas as may be required for practically feeding the gas and liquid by way of blowers and pumps to the first absorber. If the operating pressure of the first absorber is 4 bar, the operating pressure of the second absorber is greater than 4 bar, but still within the pressure range as defined herein for the operating pressure of the second absorber.

Suitably step f. comprises heating the first liquid effluent and the second liquid effluent, to obtain the regenerated absorption stream.

Heating the liquid effluents releases the absorbed gas, thus regenerating the liquid effluents into the regenerated absorption stream. In a similar manner to the step of regeneration, heating the first and second liquid effluents should not only be understood as the direct heating of the two effluents, but also contemplates configurations where the liquid effluents are mixed within or outside of the absorbers. Regeneration by heating may allow for a higher degree of regeneration compared to other methods such as a flash separation. Degree of regeneration is understood to be the amount of absorbed gasses released from the liquid compared to fully desorbed liquid. Heating may be combined with a pressure reduction. Regeneration by heating is particularly suitable for regenerating chemical absorption streams.

Suitably the regeneration system comprises a stripper column with a reboiler.

In a regeneration system which comprises a stripper column with reboiler, the liquid is heated by the reboiler thereby generating a vapour stream at the bottom of the column. The vapour stream flows upward through the column and contacts the influent liquid to strip off absorbed carbon dioxide and/or hydrogen sulphide. The gas effluent of the stripper column may be denoted an off-gas, this off-gas can be cooled to condensate some of the gas effluent and/or treated with water to recover any absorption agent contained in the gas effluent of the stripper column. Recovered liquid may be recycled into the stripper column or alternatively into one of the absorbers. There could be more than one stripper column with a reboiler, where the liquid effluents of said stripper columns are combined to obtain the regenerated absorption stream. Such a regeneration system is particularly suitable for regenerating chemical absorption streams.

Suitably the regeneration system comprises one single regeneration unit in which both the first and second liquid effluents are regenerated to provide the regenerated absorption stream, preferably wherein the regeneration unit is a stripper column with a reboiler.

A single regeneration unit may be economically advantageous. A regeneration system having one single stripper with a reboiler may similarly be economically advantageous. The liquid effluents of the first and the second absorber are regenerated in single regeneration unit, preferably the stripper with a reboiler, providing the regenerated absorption stream. A stripper with a reboiler is particularly suitable for regenerating chemical absorption streams. The regeneration unit may in addition to the stripper with a reboiler, comprise means for recovering absorption agent from the gas effluent of the stripper, also denoted off-gas, in order to recycle the recovered liquid into the stripper column or alternatively into one of the absorbers. Such means for recovering could be a cooler which condenses part of the gas effluent into liquid, followed by a gas-liquid separator.

Suitably the first and second liquid absorption streams are chemical absorption streams.

Chemical absorption streams comprise a chemical absorption agent, whereby the method makes use of chemical absorption, which is sometimes referred to as reactive absorption, to remove gas components from the biogas stream. The method according to the invention may be especially advantageous for chemical absorption processes. The regeneration of chemical absorption streams can involve high heating duties to release the absorbed gas, especially to obtain a high degree of regeneration. As chemical absorption is controlled by the concentration of available reactant, obtaining low carbon dioxide and/or hydrogen sulphide levels (emission levels) in the upgraded biogas using chemical absorption can require prohibitive amounts of energy. By having a second absorber operating at a higher pressure, the method according to the invention allows for achieving lower emission levels at the same degree of regeneration of the absorption stream. The pressure increase of the second absorber may be especially advantageous compared to increased heating duty in some applications, depending on the available hot streams and/or need for pressurization in further processing of the upgraded biogas.

The chemical absorption agent may be any suitable chemical absorption agent used in the art such as but not limited to commercially available alkanolamines. A suitable alkanolamine may be selected from the group consisting of monoethanolamine, diethanolamine, diisopropanolamine, methyldiethanolamine and triethanolamine. Another suitable amine is piperazine. Typically, the chemical absorption stream is an aqueous solution of one of the above-mentioned amines. However, mixtures comprising promoters, such as vanadium, and one or more of the listed amines in any mixing ratio may also be used in the method according to the invention. It is within the skills of a practitioner to determine the optimal amount and composition of the absorbing agent in order to achieve a suitable absorption procedure.

Suitably the first and second liquid absorption streams are physical absorption streams.

Physical absorption streams are to be understood as absorption streams that do not contain chemical absorption agents, and thus rely on physical absorption. The physical absorption streams may be any suitable physical absorption stream used in the art such as but not limited to water, methanol, NMP or mixtures of dimethyl ethers of polyethylene glycol, such as the commercially available Seloxol^{™} or Genosorb^{®}. The regeneration of physical absorption agents is typically performed in a stripper column with a stripping gas, where heating is not necessary.

Suitably a single regenerated absorption stream is obtained in step f.

The first and second liquid absorption streams are thus respective portions of the single regenerated absorption stream.

Suitably the method further comprises a step of removing water from the second gas effluent, thereby obtaining a dried biogas stream, and a step of recovering or further processing the dried biogas stream as the upgraded biogas stream. The second gas effluent may contain some water which can be removed to provide a dried biogas stream. Water removal could be achieved by pressure-swing-adsorption or temperature-swing-adsorption or other procedures which are known to the skilled practitioner.

Suitably the upgraded biogas stream comprises less than 50 ppm carbon dioxide and/or less than 4 ppm hydrogen sulphide on dry basis. "On dry basis" is understood to be the content of a species expressed as fraction/percentage of the total, where water is disregarded from the total.

The method may provide upgraded biogas having such emission levels, at improved energy/utility cost. These emission levels can be required in some applications such as for the production LBG.

Suitably the upgraded biogas stream is further processed into liquified biogas (LBG).

Lower levels of carbon dioxide and hydrogen sulphide are required for producing LBG compared to e.g. grid quality biogas, as carbon dioxide will condense and solidify during liquefaction of the biogas, potentially clogging the systems, and hydrogen sulphide may entail corrosion issues. The method according to the invention provides the upgraded biogas stream at increased pressure, and this increased pressure can be used in the liquefaction process to reduce the temperature by expansion. Hence, the energy expenditure of increasing the pressure in the second absorber to drive absorption, can be recovered at least in part in the liquefaction process. The method may thus have a synergistic effect in production of LBG. Processes for gas liquefaction are known to the skilled practitioner.

A biogas upgrade system for upgrading a biogas stream is also provided, the system being configured for performing a method according to the invention.

### Detailed description

In the following, the invention is described with reference to the non-limiting examples and drawings, where
Fig. 1 shows a schematic diagram of biogas upgrade plant known in the art,
Fig. 2 shows a schematic diagram of an embodiment of the invention where the second liquid effluent is fed to the first absorber,
Fig. 3 shows a schematic diagram of an embodiment of the invention where the first and second liquid effluents are mixed prior to regeneration,
Fig. 4 shows a schematic diagram of an embodiment of the invention where the first liquid effluent is fed into the second absorber,
Fig. 5 shows a schematic diagram of an embodiment of the invention where a part of the second liquid effluent is fed to the first absorber, and
Fig. 6 shows a schematic illustration of the concept of the invention.

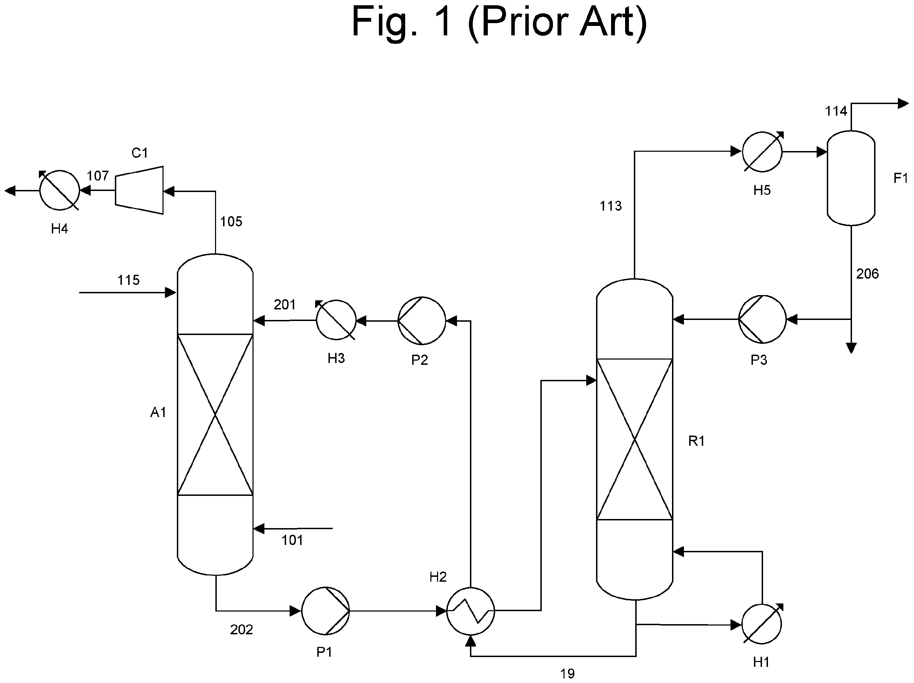

Fig. 1 shows a diagram of a process known in the art for upgrading biogas. Biogas comprising methane, carbon dioxide, and hydrogen sulphide, which is to be upgraded, is fed to the process as biogas stream 101. Biogas stream 101 is fed at the bottom of the absorber A1 where it is contacted counter-currently with a chemical absorption liquid which is fed at the top of the absorber A1 as the first liquid absorption stream 201. The gas phase exits the first absorber as first gas effluent 105 which has a reduced content of carbon dioxide and/or hydrogen sulphide compared to the biogas stream 101. The pressure of the first gas effluent 105 is increased in compressor C1 and recovered as the upgraded biogas stream which can be further processed or supplied to a gas grid. The pressurization is necessary for supplying the upgraded biogas to a gas grid or for further processing steps. The liquid phase exits the absorber A1 as the first liquid effluent 202, which is pumped to regeneration unit R1, a stripper with a reboiler.ln the regeneration unit R1 the first liquid effluent 202 is heated by way of heater H1 (the reboiler) to release absorbed gas and regenerate the chemical absorption liquid, thereby providing the regenerated absorption stream 19. The regenerated absorption stream 19 is recycled into absorber A1 as the first liquid absorption stream 201. The gases which are desorbed or vaporized in the regeneration unit R1 exits as off-gas 113 which is processed in heat exchanger H5 and separator F1 to recycle condensed liquid 206 into the regeneration unit R1 and yielding the waste off-gas 114. Fresh chemical absorption liquid or make-up liquid, such as water, may be supplied to the first absorber as stream 115 to counter-act loss of liquid in the system and/or to absorb any absorption agent from the gas phase. Moreover, stripping gas (not shown) could be fed to the regeneration unit R1 to increase the mass transfer. In variations where the process is performed with a physical absorption liquid, such as water or methanol, a typical regeneration unit would comprise a stripper column to which a stripping gas is supplied to the system. As shown in Fig. 1 the process includes several heat exchangers H2, H3, H4, H5 for heating or cooling the streams, and, pumps P1, P2, P3 for circulating the streams. Heat exchanger H1 is provided to preheat first liquid effluent 202 with the excess heat of the regenerated absorption stream 19. The symbols used in the diagram are the typical representations used in the art and do not confer any information as to the nature of the equipment used beyond the type of unit operation.

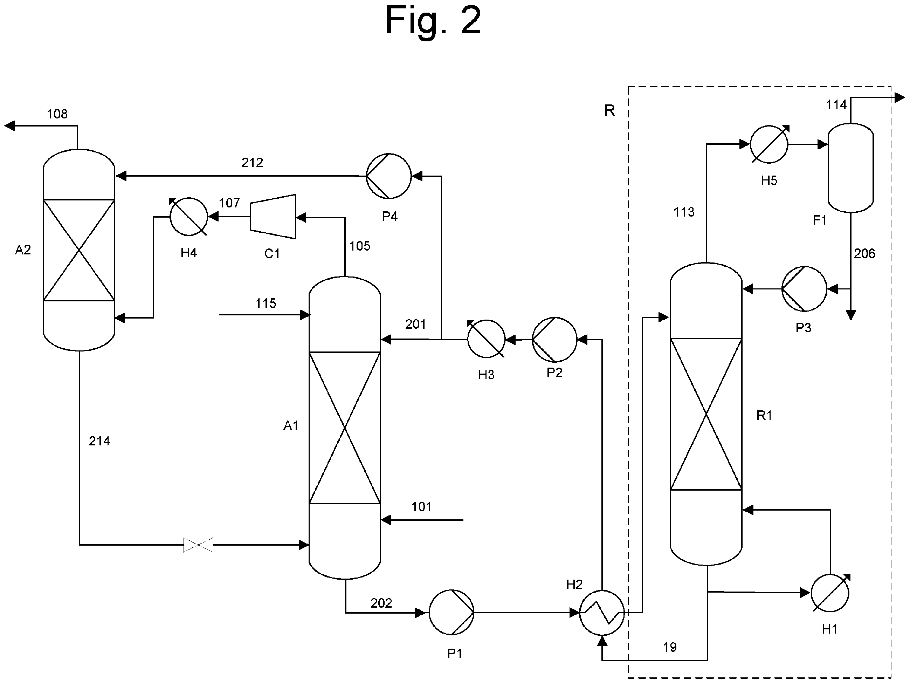

Fig. 2 shows a diagram of an embodiment of the method according the invention. Unless otherwise stated the features and reference numbers are similar to those of Fig. 1. The biogas stream 101 is fed to the bottom of the first absorber A1 while the first liquid absorption stream 201 is fed to the top. The resulting gas phase exits as the first gas effluent 105 which has a reduced content of carbon dioxide and/or hydrogen sulphide. The pressure of the first gas effluent 105 is increased in compressor C1, thereby obtaining the pressurized biogas stream 107 which is fed to the second absorber A2. The pressure of the pressurized biogas stream 107 is at least at the level of the operating pressure of the second absorber A2. The second liquid absorption stream 212 is fed at the top of the second absorber after having been pressurized by pump P4 to at least the operating pressure of the second absorber A2. In the second absorber A2, further carbon dioxide and/or hydrogen sulphide is absorbed from the gas phase, whereby the second gas effluent 108 and the second liquid effluent 214 are obtained. The first liquid effluent 202 and second liquid effluent 214 are regenerated in the regeneration system R thereby providing the regenerated absorption stream 19. In the embodiment of Fig. 2 the regeneration system R is indicated by the dashed line and contains a single regeneration unit R1 which regenerates the influent liquid by heating through heater H1 similar to the prior art process illustrated in Fig. 1. The condensed liquid stream 206 could in an alternative configuration be fed to the top of one of the absorbers in place of or in addition to stream 115, in order to absorb any chemical absorption agent from the gas phase prior to the gas exiting the absorber. The regenerated absorption stream 19 is provided in two streams by splitting the regenerated absorption stream 19 to obtain the first liquid absorption stream 201 and second liquid absorption stream 212. As the first and second liquid absorption streams 201, 212 are provided from the regenerated absorption stream 19 they have the same composition. Prior to regeneration, the second liquid effluent 214 is mixed with the first liquid effluent 202 by feeding the second liquid effluent 214 to the first absorber A1, whereby the liquid from the second liquid effluent 214 is admixed with the first liquid effluent 202, both constituting the first liquid effluent 202, which is then pumped to the regeneration system R by pump P1. This recycling of the second liquid effluent 214 allows gas absorbed in the second liquid effluent 214 to be released by the reduced pressure in the first absorber A1, and subsequently to be absorbed in the first absorber. In this way, any methane absorbed in the second absorber A2 due to the increased pressure, is released into the gas phase of the first absorber A1 whereby the methane slip of the liquid effluents is reduced. In Fig. 2 a valve is provided for reducing the pressure of the second liquid effluent 214.

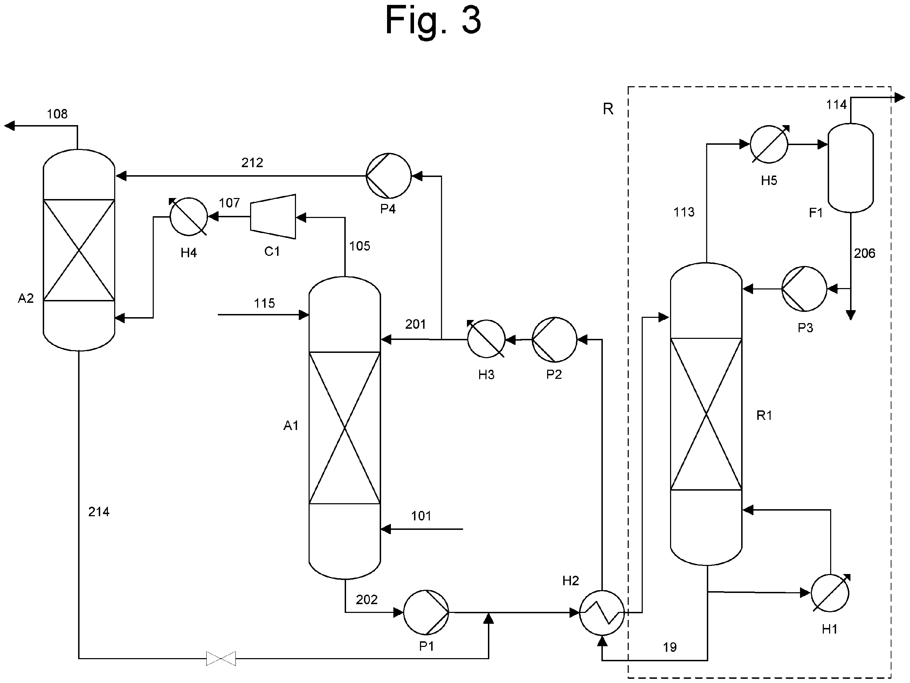

Fig. 3 shows a diagram of another embodiment of the method according the invention. Unless otherwise stated the features and reference numbers are similar to those of Fig. 2. In Fig. 3 the second liquid effluent 214 is mixed with the first liquid effluent 202 outside of the absorbers A1 and A2 and the resulting mixture is fed to the regeneration system R. In an alternative configuration the first liquid effluent 214 and second liquid effluent 202 are mixed in the regeneration unit R1 (not shown), and in yet another alternative each liquid effluent is regenerated in separate regeneration units of the regeneration system, and the resulting liquid effluents are combined to obtain the regenerated absorption stream 19 (not shown).

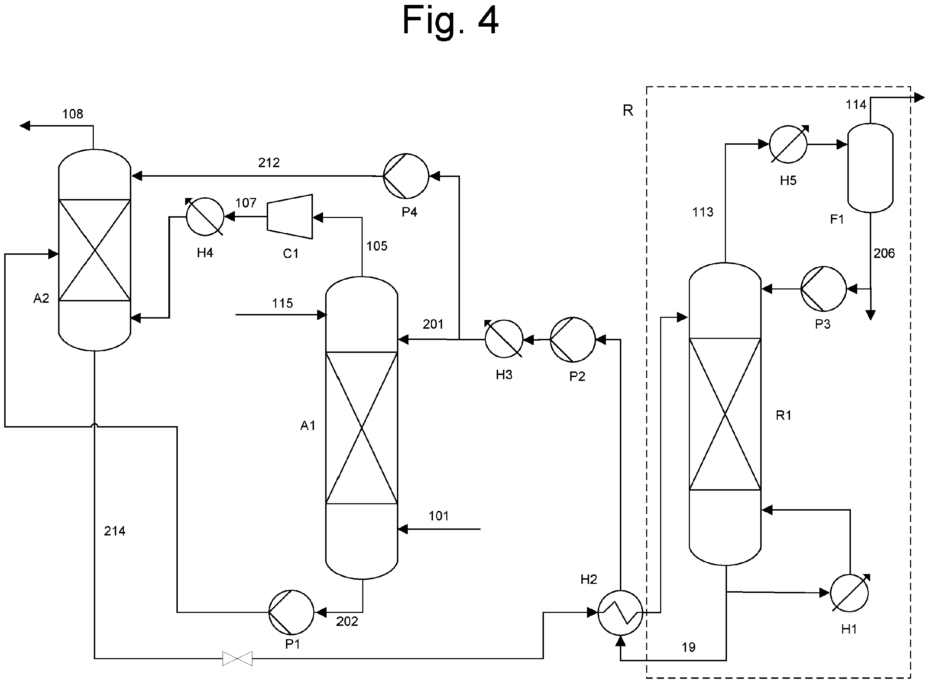

Fig. 4 shows a diagram of another embodiment of the method according the invention. Unless otherwise stated the features and reference numbers are similar to those of Fig. 2. In Fig. 4 the first liquid effluent 202 and second liquid effluent 214 are mixed prior to regeneration by feeding the first liquid effluent 202 to the second absorber A2. A part of the biogas stream 101 is absorbed in the first absorber A1 thereby reducing the amount of gas to be compressed in compressor C1. The first liquid effluent 202 is pressurized by way of pump P1 and fed to the second absorber A2 at the midpoint of the absorber. By this configuration further gas is absorbed therein to increase the load of the liquid absorption stream before it is regenerated, thereby reducing the required circulation rate of liquid.

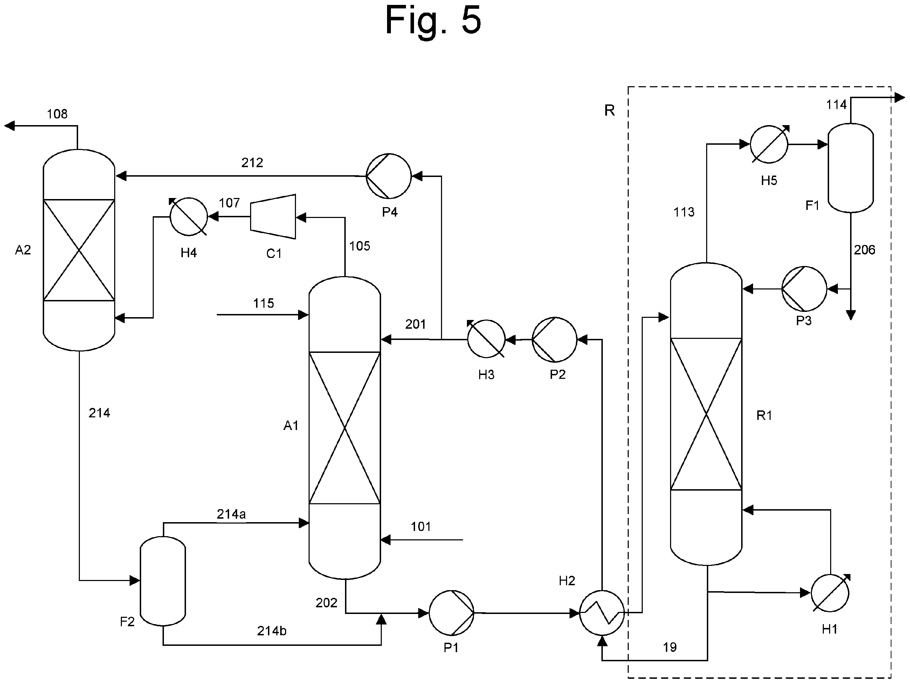

Fig. 5 shows a diagram of another embodiment of the method according the invention. Unless otherwise stated the features and reference numbers are similar to those of Fig. 2. In Fig. 5, a part of the second liquid effluent 214 is recycled into the first absorber. The recycled part is generated by flash separating the second liquid effluent 214 in separator F2 to provide a gas part 214a and a liquid part 214b thereof, allowing for the gas part 214a to be recycled into the first absorber A1 while mixing the liquid part 214b into the first liquid effluent 202.

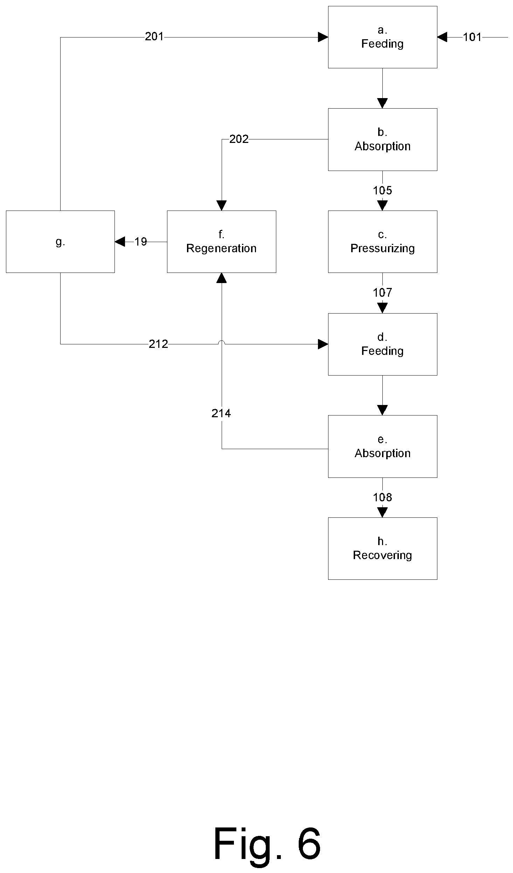

Fig. 6 shows a schematic presentation of the steps of a method according to invention, thus illustrating the concept thereof. In step a. the biogas stream 101 and the first liquid absorption stream 201 are fed to the first absorber A1. In step b. the gas and liquid phases of the first absorber are brought into contact, whereby carbon dioxide and/or hydrogen sulphide is absorbed from the gas phase into the liquid phase. The liquid phase exits as the first liquid effluent 202 and the gas phase as the first gas effluent 105. The first gas effluent 105 is pressurized in step c. providing a pressurized biogas stream which in step d. is fed to the second absorber A2 along with the second liquid absorption stream 212. Carbon dioxide and/or hydrogen sulphide is absorbed from the gas phase into the liquid phase which exit as the second liquid effluent 214 and second gas effluent 108 respectively. The second gas effluent 108 is recovered or further processed in step h. as the upgraded biogas. The first liquid effluents 202 and second liquid effluent 214 are regenerated in step f. providing the regenerated absorption stream 19, which in step g. as provided in two streams as the first liquid absorption stream 201 and second liquid absorption stream 212. As regards step f. it is to be understood that the conceptual illustration of Fig. 6 does not show how the first and second liquid effluents may be routed in a processing plant which employs the method of the invention.

The advantages of the invention will now be illustrated by way of the following non-limiting examples. The examples are process simulations performed in commercially available software such as CHEMCAD.

### Example I - Comparative

A biogas stream is upgraded according to a process as exemplified in Fig. 1. Stream properties and compositions as well as utility duties are as shown in Table I, where the reference numbers are those of Fig 1. The absorption agent is monoethanolamine (MEA) and the absorber has a column height of 16 m. The absorber is in equilibrium, i.e. further column height would not improve the upgrade process. The upgraded biogas contains 95.11 mole% methane and 274.7 ppm carbon dioxide and 81.7 ppm hydrogen sulphide. On dry basis, this corresponds to 99.96 mole% methane, 288.7 ppm carbon dioxide and 85.8 ppm hydrogen sulphide.

**Table I:**

| **Name** | **Biogas** | **Lean amine** | **Waste Off-gas** | **Upgraded Biogas** | **Pressurized Biogas** |
|---|---|---|---|---|---|
| **Reference** | 101 | 201 | 114 | 105 | 107 |

| **Stream Properties** | | | | | |
|---|---|---|---|---|---|
| **Temperature C°** | 35 | 35 | 50 | 34.92 | 40 |
| **Pressure bar(a)** | 1.1 | 4.5 | 1.8 | 1.1 | 11 |
| **Mass flow kg/h** | 1261.25 | 19197.68 | 816.30 | 449.82 | 449.82 |

| **Stream Composition mole%** | | | | | |
|---|---|---|---|---|---|
| **Methane** | 56.37 | 0 | 0.04715 | 95.11 | 95.11 |
| **Carbon dioxide** | 37.58 | 3.404 | 90.83 | 0.02747 | 0.02747 |
| **Hydrogen sulphide** | 0.9394 | 0.01456 | 2.259 | 0.008166 | 0.008166 |
| **Water** | 5.117 | 85.68 | 6.861 | 4.850 | 4.850 |
| **MEA** | - | 10.90 | 0 | 0.000254 | 0.000254 |

| **Utility Duties kW** | | | | | |
|---|---|---|---|---|---|
| **Compressor C1** | | | 78.7 | | |
| **Heat Exchanger H1** | | | 750 | | |

### Example II

The feed biogas of Example I is in this example upgraded according to a process as exemplified in Fig. 2, i.e. according to an embodiment of the invention. Stream properties and compositions as well as utility duties are as shown in Table II, where the reference numbers are those of Fig 2. The absorption agent is monoethanolamine (MEA) and the first absorber has a column height of 12 m and the second column has a height of 4 m. The upgraded biogas contains 99.47 mole% methane and 41.4 ppm carbon dioxide and 11.1 ppm hydrogen sulphide, which on dry basis is 99.99 mole%, 41.6 ppm and 11.2 ppm respectively.

Compared to example I, the present example has the same heating duty in heater H1 of 750 kW, practically the same compressor duty of about 79 kW, and the total absorber column height of the two examples are equivalent. As can be seen example II provides a purer upgraded biogas at practically the same utility duty and is thus more efficient. Further, the methane slip in the off-gas is also reduced compared to example I. The added pump duty associated with the second liquid absorption stream is insignificant due to the comparatively low utility demand of liquid pumps. The example is not necessarily optimized.

**Table II:**

| **Name** | **Biogas** | **1^{st} Lean amine** | **First gas effluent** | **Pressurized biogas** | **2^{nd} Lean amine** | **Up-graded biogas** | **Waste Off-gas** |
|---|---|---|---|---|---|---|---|
| **Reference** | 101 | 201 | 105 | 107 | 212 | 108 | 114 |

| **Stream Properties** | | | | | | | |
|---|---|---|---|---|---|---|---|
| **Temperature C°** | 35 | 35 | 34.97 | 40 | 35.27 | 35.6 | 50 |
| **Pressure bar(a)** | 1.1 | 4.5 | 1.1 | 11 | 22 | 11 | 1.8 |
| **Mass flow kg/h** | 1261.25 | 17210 | 450.6 | 450.6 | 2000 | 427.7 | 817.1 |

| **Stream Composition mole%** | | | | | | | |
|---|---|---|---|---|---|---|---|
| **Methane** | 56.37 | 0 | 95.05 | 95.05 | 0 | 99.47 | 0.03968 |
| **Carbon dioxide** | 37.58 | 3.672 | 0.3684 | 0.3684 | 3.672 | 0.004136 | 90.84 |
| **Hydrogen sulphide** | 0.9394 | 0.01660 | 0.01064 | 0.01064 | 0.01660 | 0.001115 | 2.262 |
| **Water** | 5.117 | 85.13 | 4.905 | 4.905 | 85.13 | 0.5275 | 6.862 |
| **MEA** | - | 11.17 | 0.000257 | 0.000257 | 11.18 | 0.000413 | 0 |

| **Utility Duties kW** | | | | | | | |
|---|---|---|---|---|---|---|---|
| **Compressor C1** | 78.8 | | | | | | |
| **Heater H1** | 750 | | | | | | |

### Example III

A biogas stream is upgraded according to a process as exemplified in Fig. 2 to achieve low emissions of carbon dioxide or hydrogen sulphide. Stream properties and compositions are as shown in Table II, where the reference numbers are those of Fig 2. The absorption agent is methyldiethanolamine (MDEA). The upgraded biogas contains 98.68 mole% methane and 1.6 ppm carbon dioxide and 0 ppm hydrogen sulphide. On dry basis, this corresponds to 98.98 mole% methane, 1.6 ppm carbon dioxide and 0 ppm hydrogen sulphide.

**Table III:**

| **Name** | **Biogas** | **1^{st} Lean amine** | **First gas effluent** | **Pressurized biogas** | **2^{nd} Lean amine** | **Upgraded biogas** | **Off-gas** |
|---|---|---|---|---|---|---|---|
| **Reference** | 101 | 201 | 105 | 107 | 212 | 108 | 113 |

| **Stream Properties** | | | | | | | |
|---|---|---|---|---|---|---|---|
| **Temperature C°** | 40 | 40 | 39.8 | 35 | 40.2 | 40.1 | 98.3 |
| **Pressure bar(a)** | 1.35 | 4.5 | 1.35 | 21.5 | 22 | 21.5 | 1.5 |
| **Mass flow kg/h** | 3242.5 | 41932.7 | 1131.7 | 1137.9 | 1500 | 1113.4 | 3017.0 |

| **Stream Composition mole%** | | | | | | | |
|---|---|---|---|---|---|---|---|
| **Methane** | 53.92 | 0 | 93.49 | 96.98 | 0 | 98.68 | 0.019 |
| **Carbon dioxide** | 38.35 | 0.046 | 0.13 | 0.13 | 0.046 | 0.00016 | 45.58 |
| **Hydrogen sulphide** | 0.020 | 0.00000 7 | 0.00005 | 0.00005 | 0.00000 7 | 0 | 0.00008 |
| **Oxygen** | 0.18 | 0 | 0.32 | 0.33 | 0 | 0.33 | 0.00004 8 |
| **Nitrogen** | 0.37 | 0 | 0.63 | 0.66 | 0 | 0.67 | 0.00003 3 |
| **Water** | 7.25 | 89.07 | 5.42 | 1.90 | 89.07 | 0.31 | 54.38 |
| **MDEA** | 0 | 10.89 | 0 | 0 | 10.89 | 0.00002 2 | 0.019 |

### Example IV

A biogas stream is upgraded according to a process as exemplified in Fig. 4, wherein the first liquid effluent 202 is pressurized to 8 bar(a) and fed to the middle of absorber A2. The second liquid effluent 214 is withdrawn at 8 bar(a) for the second absorber A2. The absorption agent in this example is commercially available MDEA based product sold under the name AdapT 201. Stream properties and compositions are as shown in Table IV, where the reference numbers are those of Fig 4.

**Table IV:**

| **Name** | **Biogas** | **1^{st} Lean amine** | **First gas effluent** | **Pressurized biogas** | **2^{nd} Lean amine** | **Up-graded biogas** |
|---|---|---|---|---|---|---|
| **Reference** | 101 | 201 | 105 | 107 | 212 | 108 |

| **Stream Properties** | | | | | | |
|---|---|---|---|---|---|---|
| **Temperature C°** | 40 | 60 | 30 | 215.8 | 60.1 | 30 |
| **Pressure bar(a)** | 1.10 | 1.2 | 1.06 | 6.0 | 15.0 | 7.99 |
| **Mass flow kg/h** | 3122.5 | 26108.1 | 2432.6 | 2432.6 | 6228.4 | 1185.6 |

| **Stream Composition mole%** | | | | | | |
|---|---|---|---|---|---|---|
| **Methane** | 57.4 | 0.00 | 66.5 | 66.5 | 0.00 | 95.7 |
| **Carbon dioxide** | 38.2 | 2.16 | 29.0 | 29.0 | 2.16 | 3.77 |
| **Hydrogen sulphide** | 0.596 | 0.0375 | 0.522 | 0.522 | 0.0375 | 0.052 |
| **Water** | 3.82 | 85.9 | 4.03 | 4.03 | 85.9 | 0.549 |
| **Adapt 201** | - | 11.894 | 0.00 | 0.00 | 11.894 | 0.00 |

**List of References**

| **Reference** | **Name** |
|---|---|
| 101 | Biogas stream |
| 105 | First gas effluent |
| 107 | Pressurized biogas stream |
| 108 | Second gas effluent |
| 112 | Dried biogas stream |
| 113 | Off-gas |
| 114 | Waste off-gas |
| 115 | Make-up water or fresh absorption liquid |
| 201 | First liquid absorption stream |
| 202 | First liquid effluent |
| 206 | Condensed liquid |
| 212 | Second liquid absorption stream |
| 214 | Second liquid effluent |
| 214a | Gas part of second liquid effluent |
| 214b | Liquid part of second liquid effluent |
| A1 | First absorber |
| A2 | Second absorber |
| C1 | Compressor |
| H1 | Heater (reboiler) |
| H2 | Heat exchanger |
| H3 | Heat exchanger |
| H4 | Heat exchanger |
| H5 | Heat exchanger |
| R | Regeneration system |
| R1 | Regeneration unit |
| P1 | Pump |
| P2 | Pump |
| P3 | Pump |
| P4 | Pump |

## Claims

1. A method for upgrading a biogas stream (101), the biogas stream (101) comprising methane, carbon dioxide, and hydrogen sulphide, the method comprising the steps of:
a. feeding the biogas stream (101) and a first liquid absorption stream (201) to a first absorber (A1),
b. absorbing carbon dioxide and/or hydrogen sulphide from the biogas stream (101) into the first liquid absorption stream, thereby obtaining a first gas effluent (105) and a first liquid effluent (202),
c. increasing the pressure of the first gas effluent (105), to obtain a pressurized biogas stream (107),
d. feeding the pressurized biogas stream (107) and a second liquid absorption stream (212) to a second absorber (A2),
e. absorbing carbon dioxide and/or hydrogen sulphide from the pressurized biogas stream (107) into the second liquid absorption stream (212), thereby obtaining a second gas effluent (108) and a second liquid effluent (214),
f. regenerating the first liquid effluent (202) and the second liquid effluent (214) in a regeneration system (R), thereby obtaining a regenerated absorption stream (19),
g. providing the regenerated absorption stream (19) in two streams to obtain the first liquid absorption stream (201) and the second liquid absorption stream (212), and
h. recovering or further processing the second gas effluent (108) as an upgraded biogas stream.

2. The method according to claim 1, further comprising a step of mixing the first and second liquid effluents (202, 214).

3. The method according to any one of the preceding claims, further comprising a step of feeding at least a part of the second liquid effluent (214) to the first absorber (A1), preferably at a lower section of the first absorber (A1).

4. The method according to any one of claims 1 or 2, further comprising a step of feeding the first liquid effluent (202) to the second absorber (A2), preferably at a midpoint of the second absorber.

5. The method according to any one of the preceding claims, wherein the operating pressure of the second absorber (A2) is 4 to 40 bar, preferably 10 to 30 bar, more preferably 15 to 25 bar.

6. The method according to any one of the preceding claims, wherein the operating pressure of the first absorber (A1) is 1 to 4 bar, preferably 1 to 2 bar, more preferably 1 to 1.5 bar.

7. The method according to any one of the preceding claims, wherein step f. comprises heating the first liquid effluent (202) and the second liquid effluent (214), to obtain the regenerated absorption stream (19).

8. The method according to any one of the preceding claims, wherein the regeneration system comprises a stripper column with a reboiler.

9. The method according to any one of the preceding claims, wherein the regeneration system (R) comprises one single regeneration unit (R1) in which both the first and second liquid effluents (202, 214) are regenerated to provide the regenerated absorption stream (19), preferably wherein the regeneration unit is a stripper column with a reboiler.

10. The method according to any one of the preceding claims, wherein the first and second liquid absorption streams are chemical absorption streams.

11. The method according to any one of claims 1 to 9, wherein the first and second liquid absorption streams are physical absorption streams.

12. The method according to any one of the preceding claims, wherein a single regenerated absorption stream is obtained in step f.

13. The method according to any one of the preceding claims wherein the upgraded biogas stream comprises less than 50 ppm carbon dioxide and/or less than 4 ppm hydrogen sulphide on dry basis.

14. The method according to any one the preceding claims, wherein the upgraded biogas stream is further processed into liquified biogas (LBG).

15. A biogas upgrade system for upgrading a biogas stream, the system being configured for performing the method according to any one of the preceding claims.
